(19) Europäisches Patentamt
European Patent Office
Office européen des brevets

(11) **EP 3 831 700 B1**

(12) **EUROPÄISCHE PATENTSCHRIFT**

(45) Veröffentlichungstag und Bekanntmachung des Hinweises auf die Patenterteilung:
**20.07.2022 Patentblatt 2022/29**

(21) Anmeldenummer: **20200568.2**

(22) Anmeldetag: **07.10.2020**

(51) Internationale Patentklassifikation (IPC):
**B62M 6/50** (2010.01)      **B62J 45/41** (2020.01)
**B62J 45/415** (2020.01)      **B62J 45/412** (2020.01)

(52) Gemeinsame Patentklassifikation (CPC):
**B62M 6/50; B62J 45/41; B62J 45/412;**
B60G 2300/12; B60G 2300/50; B60G 2400/25;
B60G 2400/30; B62K 2025/044

(54) **VERFAHREN ZUR ERMITTLUNG EINER EINFEDERGESCHWINDIGKEIT EINES STOSSDÄMPFERS, COMPUTERPROGRAMM, STEUERGERÄT SOWIE ZWEIRAD**

METHOD FOR DETERMINING THE DISPLACEMENT SPEED OF A SHOCK ABSORBER, COMPUTER PROGRAM, CONTROL DEVICE AND BICYCLE

PROCÉDÉ DE DÉTERMINATION D'UNE VITESSE DE RESSORT D'UN AMORTISSEUR, PROGRAMME INFORMATIQUE, APPAREIL DE COMMANDE ET DEUX-ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2019 DE 102019218865**

(43) Veröffentlichungstag der Anmeldung:
**09.06.2021 Patentblatt 2021/23**

(73) Patentinhaber: **Robert Bosch GmbH**
**70442 Stuttgart (DE)**

(72) Erfinder:
• **Klug, Silas**
**71106 Magstadt (DE)**
• **Moia, Alessandro**
**71088 Holzgerlingen (DE)**

(56) Entgegenhaltungen:
**EP-A2- 3 434 499     DE-A1-102018 211 334**

## Beschreibung

Die vorliegende Erfindung betrifft ein Verfahren zur Ermittlung einer Einfedergeschwindigkeit eines Stoßdämpfers eines Zweirads. Die Erfindung betrifft auch ein Computerprogramm, welches dazu eingerichtet ist, ein erfindungsgemäßes Verfahren durchzuführen. Außerdem betrifft die Erfindung ein Steuergerät, welches dazu eingerichtet ist, das erfindungsgemäße Verfahren durchzuführen. Die Erfindung betrifft ferner ein Elektrofahrrad mit diesem Steuergerät.

Stand der Technik

Die Schrift EP 3 077 261 B1 offenbart eine Steuereinheit zur Verwendung an einem Zweiradfahrzeug, wobei die Steuereinheit einen ersten und einen zweiten Federsensor umfasst, welche an der ersten bzw. der zweiten Federvorrichtung angeordnet sind. Das Dokument DE 10 2014 209 472 A1 offenbart eine Federgabelanordnung und ein Verfahren zur Einstellung eines Parameters einer Federgabel eines Zweirades.
Das Dokument EP 3 434 499 A2 offenbart ein Verfahren mit den Merkmalen der Präambel des Anspruchs 1.
Die Aufgabe der vorliegenden Erfindung ist es, die Ermittlung eines Federwegs beziehungsweise einer Einfedergeschwindigkeit eines Stoßdämpfers zu verbessern.

Offenbarung der Erfindung

Die vorliegende Aufgabe wird erfindungsgemäß nach einem der unabhängigen Ansprüche 1, 8 oder 9 gelöst.
Die vorliegende Erfindung betrifft ein Verfahren zur Ermittlung einer Einfedergeschwindigkeit eines Stoßdämpfers eines Zweirads. Das Zweirad weist eine Antriebseinheit mit einem Antriebsmotor zum motorischen oder motorisch unterstützten Antrieb des Zweirads auf. Das Zweirad ist mit anderen Worten vorteilhafterweise ein Motorrad oder ein Elektrofahrrad. Beispielsweise ist das Zweirad ein Mountainbike mit einer Antriebseinheit zur motorischen Unterstützung des Radfahrers, wobei die Antriebseinheit insbesondere einen Elektromotor als Antriebsmotor und zusätzlich vorteilhafterweise eine Kurbelwelle mit Pedalen umfasst. Zwischen dem Antriebsmotor und einem Abtriebselement der Antriebseinheit ist bevorzugt eine feste oder schaltbare Getriebeübersetzung vorgesehen. Das Zweirad weist erfindungsgemäß einen Stoßdämpfer auf, wobei der Stoßdämpfer zwischen einem Rahmen des Zweirads und einer Hinterradaufhängung des Zweirads angeordnet ist. Mit anderen Worten ist die Hinterradaufhängung beziehungsweise das Hinterrad vorteilhafterweise mittels des Stoßdämpfers federnd an dem Zweiradrahmen befestigt, wodurch Stoßbelastungen am Hinterrad gegenüber dem Zweiradrahmen abgefedert werden. Das erfindungsgemäße Verfahren weist eine Erfassung einer Winkelgeschwindigkeit des Hinterrads beziehungsweise eine Erfassung einer Raddrehzahl des Hinterrads des Zweirads auf. Vorteilhafterweise wird diese Winkelgeschwindigkeit des Hinterrads mittels eines Inkrementalgebers erfasst. In einem weiteren Schritt wird eine Motordrehzahl des Antriebsmotors erfasst. Vorteilhafterweise wird die Motordrehzahl mittels Sensoren im Antriebsmotor zur elektrischen Kommutierung beziehungsweise Sensoren zur Rotorpositionsbestimmung erfasst. Anschließend wird in einem Schritt die Einfedergeschwindigkeit des Stoßdämpfers in Abhängigkeit der erfassten Winkelgeschwindigkeit des Hinterrads und der erfassten Motordrehzahl ermittelt. Vorteilhafterweise wird dabei als Zwischenschritt ein sogenannter Kettenrückzug beziehungsweise eine Differenz in Abhängigkeit einer basierend auf der erfassten Winkelgeschwindigkeit des Hinterrads ermittelten ersten Kettengeschwindigkeit und einer basierend auf der erfassten Motordrehzahl ermittelten zweiten Kettengeschwindigkeit ermittelt. Diese Differenz repräsentiert den Kettenrückzug, welcher beim Einfedern des Stoßdämpfers auftritt. Durch dieses Verfahren resultiert der Vorteil, dass die Einfedergeschwindigkeit des Stoßdämpfers genau ermittelt wird. Ferner resultiert der Vorteil, dass für dieses Verfahren kein zusätzlicher Sensor am Stoßdämpfer beziehungsweise in der Nähe des Stoßdämpfers angeordnet bzw. vorgesehen ist. Stattdessen werden vorteilhafterweise sowieso vorhandene Sensoren verwendet.
Vorzugsweise werden in einem anschließenden Schritt ein aktueller Federweg des Stoßdämpfers und/oder eine Einfederbeschleunigung des Stoßdämpfers in Abhängigkeit der ermittelten Einfedergeschwindigkeit des Stoßdämpfers genau ermittelt. Des Weiteren kann es optional vorgesehen sein, dass ein Antriebsmotor des Zweirads in Abhängigkeit der ermittelten Einfedergeschwindigkeit, des ermittelten Federweges und/oder der ermittelten Einfederbeschleunigung gesteuert wird. Beispielsweise wird das erzeugte Motordrehmoment durch diese Steuerung angepasst. Dadurch kann beispielsweise der Vorteil erzeugt werden, dass das Motordrehmoment bei unebenem Untergrund automatisch reduziert wird, wodurch die Geschwindigkeit des Zweirads ebenfalls reduziert und die Fahrt mit dem Zweirad sicherer ist. Es kann beispielsweise auch der Vorteil erzeugt werden, dass die aktuelle Radaufstandskraft geschätzt wird. Ist etwa auf unebenem Untergrund das geforderte Motormoment kurzzeitig größer, als es die aktuelle Radaufstandskraft erlaubt, kann das Motormoment kurzzeitig reduziert werden. Somit wird vorteilhafterweise ein drohendes Durchdrehen des Hinterrades verhindert. Diese Ausführung resultiert folglich vorteilhafterweise in einem Sicherheits-, Effizienz und Komfortgewinn.
Vorteilhafterweise erfolgt ferner eine Steuerung einer Federkonstante des Stoßdämpfers des Zweirads in Abhängigkeit der ermittelten Einfedergeschwindigkeit des Stoßdämpfers. Dadurch wird vorteilhafterweise die Steuerung der Federkonstante beziehungsweise einer Dämpferkonstante des Stoßdämpfers automatisiert durchgeführt, wodurch die Fahrt für den Radfahrer komfortabler und sicherer wird.

In einer weiteren Ausgestaltung, wird eine Erkennung eines Schlaglochs eines Untergrunds einer Fahrtstrecke des Zweirads in Abhängigkeit der ermittelten Einfedergeschwindigkeit des Stoßdämpfers durchgeführt. Anschließend wird ein Motordrehmoment des Antriebsmotors in Abhängigkeit des erkannten Schlaglochs angepasst beziehungsweise der Antriebsmotor des Zweirads in Abhängigkeit des erkannten Schlaglochs gesteuert. Dadurch wird die Fahrt für den Radfahrer vorteilhafterweise komfortabler und sicherer.

In einer anderen Ausgestaltung der Erfindung wird eine Endlagendämpfung des Stoßdämpfers in Abhängigkeit der ermittelten Einfedergeschwindigkeit des Stoßdämpfers erkannt. Die Endlagendämpfung repräsentiert einen ermittelten Federweg, welcher im Bereich des maximal möglichen Federwegs liegt. Beispielsweise liegt die Endlagendämpfung vor, wenn der ermittelte Federweg ein Schwellenwert von 80% des maximal möglichen Federwegs oder ein Schwellenwert von 90% des maximal möglichen Federwegs überschreitet. Anschließend erfolgt eine Warnung des Radfahrers beziehungsweise eine Anzeige einer Information für den Radfahrer in Abhängigkeit der erkannten Endlagendämpfung und/oder eine Steuerung des Antriebsmotors des Zweirads oder der Federkonstante des Stoßdämpfers in Abhängigkeit der erkannten Endlagendämpfung. Es kann beispielsweise vorgesehen sein, dass der Radfahrer optisch, akustisch und/oder haptisch in Abhängigkeit der erkannten Endlagendämpfung gewarnt wird. Ferner wird beispielsweise vorteilhafterweise die Geschwindigkeit des Zweirads durch Anpassung des Motordrehmoments des Antriebsmotors in Abhängigkeit der erkannten Endlagendämpfung gesenkt und/oder die Federkonstante der Federgabel in Abhängigkeit der erkannten Endlagendämpfung erhöht. In dieser Ausgestaltung wird vorteilhafterweise eine mechanische Beschädigung des Stoßdämpfers reduziert oder vermieden sowie die mechanischen Komponenten des Zweirads vor Stoßbelastungen und/oder Vibrationsbelastungen geschützt. Weiterhin kann der Radfahrer vorteilhafterweise auf einem geeignetem Anzeigegerät einen Hinweis zur verbesserten Justierung des Stoßdämpfers in Abhängigkeit der erkannten Endlagendämpfung erhalten. Dieser Hinweis umfasst beispielsweise die Anpassung des Luftfederdrucks und/oder der entsprechenden Dämpfung mittels einer Stellschraube.

In einer Weiterführung wird nach der Ermittlung der Einfedergeschwindigkeit eine Erkennung eines Abhebens des Hinterrads in Abhängigkeit der ermittelten Einfedergeschwindigkeit des Stoßdämpfers durchgeführt, wobei die Erkennung des Hinterradabhebens insbesondere vorausschauend erfolgt. Mit anderen Worten wird insbesondere ein voraussichtliches Abheben des Hinterrads erkannt beziehungsweise bei der Erkennung vorteilhafterweise das Abheben des Hinterrads prognostiziert. Anschließend wird eine Warnung des Radfahrers in Abhängigkeit des erkannten Abhebens des Hinterrads und/oder eine Steuerung des Elektromotors in Abhängigkeit des erkannten Abhebens des Hinterrads und/oder eine Steuerung einer Bremse des Zweirads in Abhängigkeit des erkannten Abhebens des Hinterrads durchgeführt.

Dadurch wird vorteilhafterweise eine kritische beziehungsweise gefährliche Fahrsituation erkannt und vorteilhafterweise beziehungsweise optional der Radfahrer vor dieser Gefahr automatisiert gewarnt. Somit wird die Fahrt mit dem Zweirad sicherer. Des Weiteren kann in einem weiteren optionalen Schritt vorteilhafterweise dem Radfahrer eine Information zum erkannten Abheben des Hinterrads angezeigt werden, beispielsweise die prognostizierte Höhe des erkannten Abhebens. Dadurch kann ein gewünschtes Fahrmanöver mit abhebendem Hinterrad unterstützt werden, beispielsweise eine Fahrt mit einem Mountainbike durch eine sehr spitze und enge Kurve, was als sogenanntes Spitzkehrenmaneuver beziehungsweise Switchback bezeichnet wird.

In einer Weiterführung wird in einem zusätzlichen Schritt ein Einfederweg einer Federgabel des Zweirads erfasst. Anschließend erfolgt in dieser Weiterführung eine Ermittlung eines Nickwinkels des Zweirads in Abhängigkeit der ermittelten Einfedergeschwindigkeit des Stoßdämpfers und des erfassten Einfederwegs der Federgabel. Durch diese Weiterführung können der Nickwinkel des Zweirads und/oder die Drehgeschwindigkeit des Zweirads um die Querachse des Zweirads vorteilhafterweise genau ermittelt werden. Vorteilhafterweise wird ferner außerdem anschließend ein Antriebsmotor des Zweirads in Abhängigkeit des ermittelten Nickwinkels und/oder in Abhängigkeit der ermittelten Drehgeschwindigkeit des Zweirads um dessen Querachse gesteuert, beispielsweise wird das erzeugte Motordrehmoment durch die Steuerung angepasst. Dadurch erfolgt vorteilhafterweise eine Anpassung der Steuerung des Elektrofahrrads an eine Steigung der Fahrtstrecke. Beispielsweise wird das unterstützende Motordrehmoment an einer Fahrt berghoch beziehungsweise bei Nickwinkeln oberhalb eines Schwellenwertes erhöht, beziehungsweise bei drohendem Vorderradabheben (wheelie) verringert. Dadurch wird vorteilhafterweise der Antrieb des Zweirads effizienter und/oder die Fahrt für den Radfahrer komfortabler und/oder sicherer.

Es kann des Weiteren optional vorgesehen sein, dass ein Luftsprung des Elektrofahrrads in Abhängigkeit des ermittelten Nickwinkels und der ermittelten Einfedergeschwindigkeit des Stoßdämpfers erkannt wird. In dieser Ausgestaltung erfolgt eine Steuerung einer Federkonstanten des Stoßdämpfers des Zweirads und/oder einer Federkonstante der Federgabel des Zweirads in Abhängigkeit des erkannten Luftsprungs. Alternativ oder zusätzlich wird der Antriebsmotor des Zweirads in Abhängigkeit des erkannten Luftsprungs gesteuert beziehungsweise das Motordrehmoment in Abhängigkeit des erkannten Luftsprungs angepasst. Durch diese Ausgestaltung wird vorteilhafterweise eine Landung nach dem Luftsprung unterstützt. Dadurch wird der Luftsprung beziehungsweise die Landung des Zweirads komfortabler und sicherer. Auch kann das Motormoment gezielt eingesetzt beziehungsweise erzeugt werden um über eine Veränderung des Drehimpulses um die Fahrzeugquerachse den Fahrzeugnickwinkel aktiv zu beeinflussen.

Die Erfindung betrifft des Weiteren ein Computerprogramm, welches dazu eingerichtet ist, das erfindungsgemäßes Verfahren durchzuführen.

Die Erfindung betrifft darüber hinaus ein Steuergerät, welches dazu eingerichtet sind, das erfindungsgemäßes Verfahren durchzuführen. Das Steuergerät weist vorteilhafterweise Mittel auf, insbesondere eine Recheneinheit und elektrische Schnittstellen, welche dazu eingerichtet sind, das erfindungsgemäßes Verfahren durchzuführen.

Ferner betrifft die Erfindung auch ein Zweirad, welches das erfindungsgemäße Steuergerät aufweist, wobei das Zweirad insbesondere ein Elektrofahrrad oder ein Motorrad ist.

Weitere Vorteile ergeben sich aus der nachfolgenden Beschreibung von Ausführungsbeispielen mit Bezug zu den Figuren.

Figur 1a:     Elektrofahrrad als Zweirad mit Stoßdämpfer

Figur 1b:     Detailansicht der Antriebseinheit des Elektrofahrrads aus Figur 1a

Figur 2:      Winkelgeschwindigkeiten bei Wirkung des Stoßdämpfers

Figur 3:      Ablaufdiagramm des Verfahrens

Ausführungsbeispiele

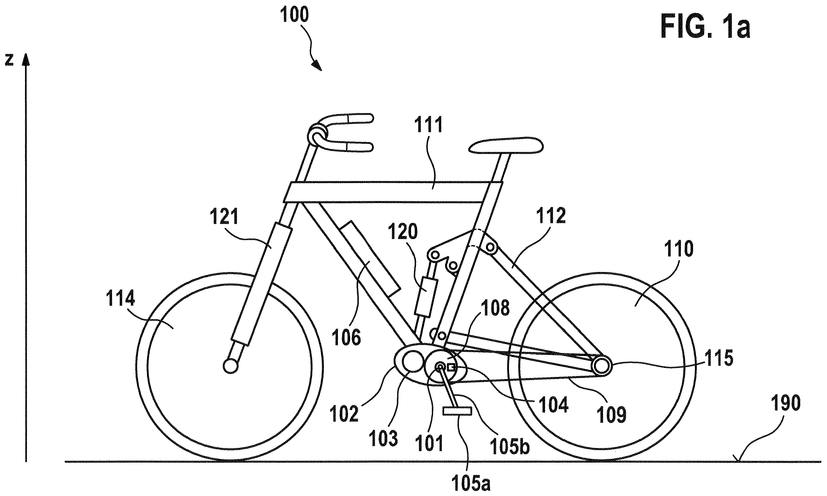

Figur 1a zeigt ein Ausführungsbeispiel, wobei als Zweirad 100 ein Elektrofahrrad schematisch dargestellt ist. Das Elektrofahrrad weist an einer Kurbelwelle 101 eine Antriebseinheit 102 auf. Die Trittkraft des Radfahrers wird für jedes Bein jeweils mittels eines Pedals 105a und einer Kurbel 105b an die Kurbelwelle 101 übertragen. Die Antriebseinheit 102 umfasst einen Elektromotor als Antriebsmotor 103 und einen Sensor 104 zur Erfassung der Trittkraft beziehungsweise eines Fahrerdrehmoments. Die Antriebseinheit 102 wird mittels eines Batteriemoduls 106 mit Strom beziehungsweise elektrischer Leistung versorgt. Der Antriebsmotor 103 wird typischerweise im Betrieb in Abhängigkeit des mittels des Sensors 104 erfassten Fahrerdrehmoments des Radfahrers zur Erzeugung eines Motordrehmoments gesteuert. Dadurch erfolgt der kraftunterstützte Antrieb des Hinterrads 110 beziehungsweise des Elektrofahrrads. Erfindungsgemäß ist ein Stoßdämpfer 120 ist zwischen dem Zweiradrahmen 111 und einer Hinterradaufhängung 112 angeordnet und dazu eingerichtet, Stöße und Vibrationen des Hinterrads 113 gegenüber dem Zweiradrahmen 111 zu dämpfen, welche durch Kontakt des Hinterrads 113 mit dem Untergrund 190 resultieren. Eine optionale Federgabel 121 ist zwischen dem Zweiradrahmen 111 und einem Vorderrad 114 angeordnet und dazu eingerichtet, Stöße und Vibrationen des Vorderrads 114 gegenüber dem Zweiradrahmen 111 zu dämpfen, welche durch Kontakt des Vorderrads 114 mit dem Untergrund 190 resultieren. Durch den Stoßdämpfer 120 und die Federgabel 121 werden folglich jeweils Stöße und Vibrationen gedämpft, so dass beispielsweise eine komfortablere und sicherere Fahrt für den Radfahrer auf einem unebenen Untergrund einer Fahrtstrecke resultiert. Dies ist insbesondere wichtig, wenn das Elektrofahrrad ein Mountainbike ist, welches beispielsweise auf Downhill-Fahrten eingesetzt wird. Es kann darüber hinaus für den Radfahrer eines Mountainbikes während einer Downhill-Fahrt notwendig sein, das Hinterrad 113 des Elektrofahrrads anzuheben um enge Kurven durchfahren zu können. Ferner kann es für den Radfahrer eines Mountainbikes während einer Downhill-Fahrt auch notwendig sein, Luftsprünge mit dem Elektrofahrrad durchzuführen um Absätze und/oder Gräben im Untergrund der Fahrtstrecke überfahren zu können.

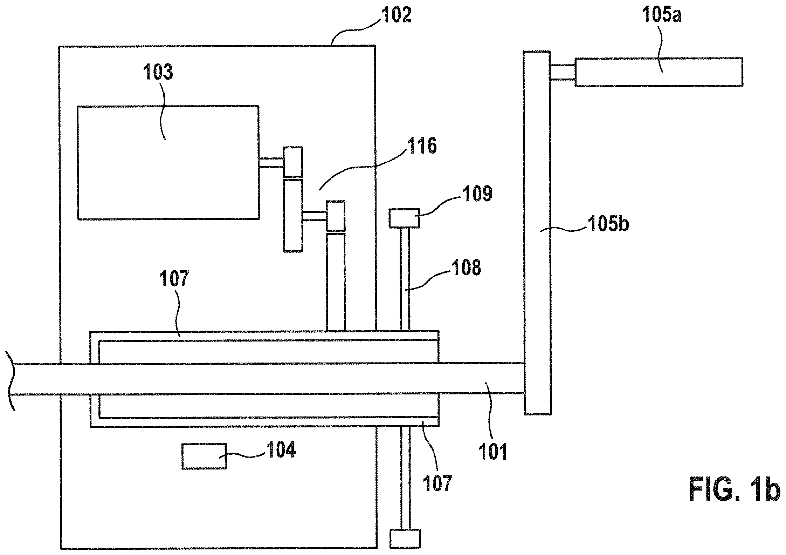

Figur 1b zeigt eine vergrößerte Ansicht eines Beispiels einer Antriebseinheit 102 aus Figur 1a im Querschnitt. Die Kurbelwelle 101 ist beispielsweise mittels einer Hohlwelle 107 und einem Getriebe 116 mit dem Elektromotor 103 verbunden, wobei ein drehfest mit der Hohlwelle 107 verbundenes Abtriebsritzel als Abtriebselement 108 der Antriebseinheit 102 dazu eingerichtet ist, ein aus dem Fahrerdrehmoment und aus dem Motordrehmoment summiertes Antriebsdrehmoment der Antriebseinheit 102 mittels eines Riemens oder einer Kette als Antriebsverbindungselement 109 an ein Hinterrad 110 des Elektrofahrrads zum Antrieb des Elektrofahrrads zu übertragen (siehe auch Figur 1a).

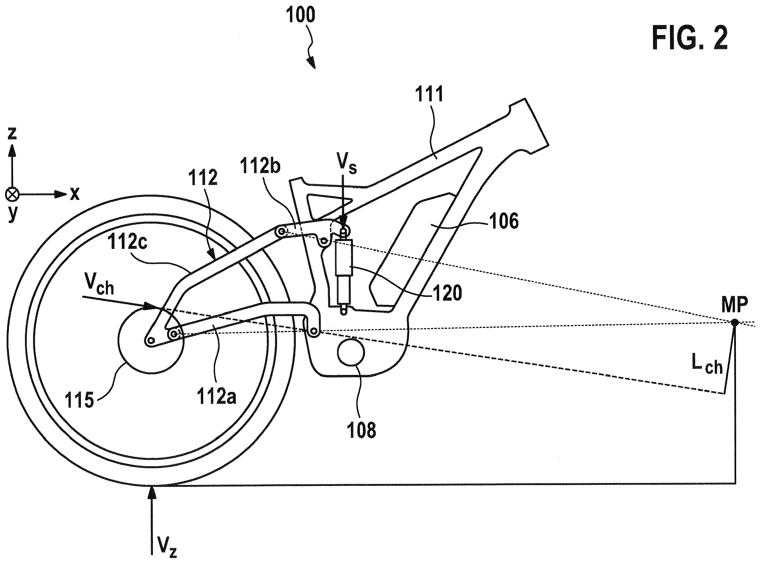

In Figur 2 ist ein Teilbereich einer in diesem Ausführungsbeispiel dreiteiligen Hinterradaufhängung 112 des Zweiradrahmens 111 des Elektrofahrrads als Zweirad 100 aus Figur 1a schematisch dargestellt, wobei zusätzlich die während des Betriebs des Elektrofahrrads auftretenden Winkelgeschwindigkeiten beziehungsweise Geschwindigkeiten dargestellt sind. Die dargestellte Geschwindigkeit Vz des Hinterrads in z-Richtung repräsentiert eine Bewegung des Hinterrads relativ zum Zweiradrahmen in Richtung der Hochachse z des Zweirads beziehungsweise nach oben. Die dargestellte Geschwindigkeiten ΔVch repräsentiert einen Geschwindigkeitsanteil eines zu beobachtenden Rückzugs des Antriebsverbindungselement 109 beziehungsweise einen Ketten- oder Riemenrückzug als Folge einer Bewegung des Hinterrads 110 in Richtung der Hochachse z des Zweirads. Betrachtet man die Winkelgeschwindigkeiten um den Punkt MP (MP steht für momentaner Drehpunkt), welcher sich aus der Verbindungslinien der jeweiligen Lagerpunkte der zwei mit dem Zweiradrahmen 111 verbundenen Einzelteile 112a und 112b der Hinterradaufhängung 112 sowie des Schnittpunktes dieser Verbindungslinien ergibt, so folgt Gleichung (1), da die Winkelgeschwindigkeiten der Drehungen um den Punkt MP näherungsweise gleich sind.

$$\omega_{ch} = -\omega_z$$

$$\frac{\Delta Vch}{Lch} = -\frac{Vz}{Lz}$$

$$v_z = -\frac{L_Z}{L_{ch}} \cdot \Delta V_{ch} \hspace{4cm} \text{(Gleichung 1)}$$

Die Einfedergeschwindigkeit Vs des Stoßdämpfers 120 ist eine Funktion der Geschwindigkeit Vz des Hinterrads 110 in Richtung der Hochachse z des Zweirads 100. Die Funktion bzw. der Graph der Einfedergeschwindigkeit Vs des Stoßdämpfers verläuft insbesondere näherungsweise linear, siehe Gleichung (2). Mit anderen Worten kann die Steigung der linearen Funktion zur Ermittlung der Einfedergeschwindigkeit Vs des Stoßdämpfers in Abhängigkeit der Geschwindigkeit ΔVch des Kettenrückzugs aus geometrischen Überlegungen näherungsweise als Konstante betrachtet werden.

$$v_S = c \cdot v_z = -c \cdot \frac{L_Z}{L_{ch}} \cdot \Delta V_{ch} \hspace{3cm} \text{(Gleichung 2)}$$

Die Winkelgeschwindigkeit $\omega_{rad}$ des Hinterrads 110 beziehungsweise die Drehzahl $n_{rad}$ des Hinterrads 110 kann beispielsweise mittels eines Inkrementalgebers an der Nabe des Hinterrads 110 erfasst werden. Diese Winkelgeschwindigkeit $\omega_{rad}$ des Hinterrads 110 entspricht ferner der Winkelgeschwindigkeit $\omega_{rad}$ an einem Ritzel 115 des Hinterrads 110, wobei möglicherweise mehrere unterschiedlich große Ritzel 115 eines Ritzelpakets einer Gangschaltung am Hinterrad 110 angeordnet sind. Die Winkelgeschwindigkeit $\omega_{rad}$ des Hinterrads 110 beziehungsweise die Winkelgeschwindigkeit des Ritzels 115 wird nicht durch den Rückzug des Antriebsverbindungselements 109 bei einer Bewegung des Hinterrads 110 nach oben beeinflusst, da das Antriebsdrehmoment am Hinterrad 110 an dem Untergrund der Fahrtstrecke des Zweirads abgestützt wird. Die Geschwindigkeit Vch des Antriebsverbindungselements 109 ist eine lineare Funktion der Winkelgeschwindigkeit $\omega_{rad}$ des Hinterrads 110, siehe Gleichung (3). Die Steigung b der Funktion der Geschwindigkeit Vch des Antriebsverbindungselements 109 beziehungsweise der Radius zur Nabe des Hinterrads 110 kann sich im Falle einer an der Nabe des Hinterrads 110 angeordneten Gangschaltung beziehungsweise eines an der Nabe des Hinterrads 110 angeordneten Ritzelpakets in Abhängigkeit des eingelegten Übersetzungsverhältnisses bzw. Gangs der Gangschaltung ändern.

$$v_{ch} = b\,(Gang) \cdot \omega_{Rad} = b\,(Gang) \cdot 2\pi n_{Rad} \hspace{2.5cm} \text{(Gleichung 3)}$$

Die Geschwindigkeit Vch des Antriebsverbindungselements 109 und die Geschwindigkeit ΔVch des Rückzugs des Antriebsverbindungselements 109 durch die Bewegung des Hinterrads 110 in Richtung der Hochachse z des Zweirads 100 werden auf das Abtriebselement 108 der Antriebseinheit 102 übertragen. Zwischen dem Abtriebselement 108 der Antriebseinheit 102 und dem Antriebsmotor 103 beziehungsweise dem Elektromotor 103 liegt insbesondere ein Getriebe mit einem festen Übersetzungsverhältnis vor. Alternativ kann eine variable Übersetzung zwischen dem Elektromotor 103 und dem Abtriebselement 108 vorgesehen sein. Somit kann die Geschwindigkeit ΔVch des Rückzugs des Antriebsverbindungselements 109 in Abhängigkeit der Motordrehzahl $n_M$ und der Winkelgeschwindigkeit $\omega_{rad}$ des Hinterrads 110 nach Gleichung 4 ermittelt werden.

$$\Delta v_{ch} = a(Gang) \cdot 2\pi \cdot n_M - b\,(Gang) \cdot \omega_{Rad} \hspace{2cm} \text{(Gleichung 4)}$$

Aus einer Kombination von Gleichung (2) und Gleichung (4) folgt ferner Gleichung (5) zur Ermittlung der Einfedergeschwindigkeit Vs des Stoßdämpfers 120 des Zweirads 100 in Abhängigkeit der Motordrehzahl $n_M$ und der Winkelgeschwindigkeit $\omega_{rad}$ des Hinterrads 110 beziehungsweise der Raddrehzahl $n_{Rad}$. Mit anderen Worten kann die Einfedergeschwindigkeit Vs des Stoßdämpfers 120 des Zweirads 100 gemäß Gleichung (5) in Abhängigkeit der Motordrehzahl $n_M$ und der Winkelgeschwindigkeit $\omega_{rad}$ des Hinterrads 110 ermittelt werden.

$$v_S = -c \cdot \frac{L_Z}{L_{ch}} \cdot \left( a(Gang) \cdot 2\pi \cdot n_M - b\,(Gang) \cdot \omega_{Rad} \right) \text{(Gleichung 5)}$$

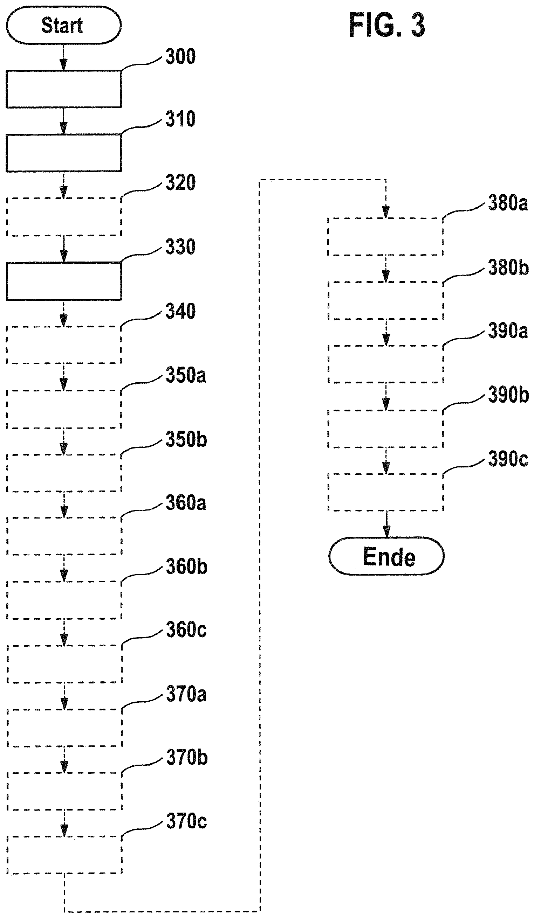

In Figur 3 ist ein Ablaufdiagramm des Verfahrens schematisch als Blockdiagramm dargestellt. Das Verfahren beginnt im Schritt 300 mit einer Erfassung einer Winkelgeschwindigkeit $\omega_{rad}$ des Hinterrads 110 des Zweirads 100. Im Schritt 310 wird eine Motordrehzahl $n_M$ des Antriebsmotors 103 beziehungsweise des Elektromotors erfasst. Optional kann zusätzlich eine Erfassung 320 eines Einfederwegs einer Federgabel 121 des Zweirads 100 vorgesehen sein. In einem Schritt 330 wird eine Ermittlung einer Einfedergeschwindigkeit Vs des Stoßdämpfers 120 in Abhängigkeit der erfassten Winkelgeschwindigkeit $\omega_{rad}$ des Hinterrads 110 und der erfassten Motordrehzahl $n_M$ durchgeführt. Optional kann es im Schritt 340 vorgesehen sein, eine Federkonstante des Stoßdämpfers 120 des Zweirads 100 in Abhängigkeit der ermittelten Einfedergeschwindigkeit Vs des Stoßdämpfers 120 zu steuern, beispielsweise mittels eines elektrischen Aktors. In einer weiteren optionalen Ausgestaltung kann es im Schritt 350a vorgesehen sein, ein Schlagloch eines Untergrunds 190 einer Fahrtstrecke des Zweirads 100 in Abhängigkeit der ermittelten Einfedergeschwindigkeit Vs des Stoßdämpfers 120 zu erkennen und anschließend eine optionale Steuerung 350b des Antriebsmotors 103 des Zweirads 100 in Abhängigkeit des erkannten Schlaglochs durchzuführen. Im optionalen Schritt 350b wird bevorzugt das Motordrehmoment zur Absenkung der Zweiradgeschwindigkeit bei einem erkannten Schlagloch des Untergrunds 190 reduziert. In einer weiteren Ausgestaltung wird in einem optionalen Schritt 360a nach der Ermittlung 330 der Einfedergeschwindigkeit Vs des Stoßdämpfers 120 eine Endlagendämpfung des Stoßdämpfers 120 in Abhängigkeit der ermittelten Einfedergeschwindigkeit Vs des Stoßdämpfers 120 erkannt. Anschließend wird der Radfahrer im optionalen Schritt 360b in Abhängigkeit der erkannten Endlagendämpfung akustisch, optisch und/oder haptisch gewarnt und/oder es wird im optionalen Schritt 360b eine Steuerung 360c des Antriebsmotors 103 des Zweirads 100 in Abhängigkeit der erkannten Endlagendämpfung durchgeführt. Die erkannte Endlagendämpfung repräsentiert eine erfolgte beziehungsweise aktuelle Einfederung des Stoßdämpfers in einem Federwegbereich von einem Schwellenwert von beispielsweise 80-90% des maximalen Federwegs bis zu einem maximalen Federweg beziehungsweise einen Anschlag des Stoßdämpfers 120 an dessen Endlage. In einem weiteren optionalen Schritt 370a wird eine Erkennung eines Abhebens des Hinterrads 110 in Abhängigkeit der ermittelten Einfedergeschwindigkeit Vs des Stoßdämpfers 120 durchgeführt. Zusätzlich oder alternativ kann im Schritt 370a das Abheben des Hinterrads 110 in Abhängigkeit von ermittelten, das heißt insbesondere fehlenden, Vibrationen des Hinterrads 110 erkannt werden. Diese Vibrationen werden optional im Schritt 370a in Abhängigkeit der ermittelten Einfedergeschwindigkeit Vs des Stoßdämpfers 120 ermittelt, insbesondere als fehlend. Die optionale Erkennung 370a des Hinterradabhebens erfolgt insbesondere vorausschauend, beispielsweise in Abhängigkeit der Einfederbeschleunigung $a_s$, wobei die Einfederbeschleunigung $a_s$ in Abhängigkeit der Einfedergeschwindigkeit Vs ermittelt werden kann. Beispielsweise wird im Schritt 370a ein abhebendes Hinterrad 110 erkannt, wenn eine ermittelte Einfederbeschleunigung $a_s$ des Stoßdämpfers 120 in Richtung der z-Achse einen Schwellenwert überschreitet. Anschließend kann im optionalen Schritt 370b eine akustische, optische und/oder haptische Warnung des Radfahrers in Abhängigkeit des erkannten Abhebens des Hinterrads 110 und/oder im optionalen Schritt 370c eine Steuerung des Elektromotors 103 und/oder einer Bremse des Zweirads 100 in Abhängigkeit des erkannten Abhebens des Hinterrads 110 durchgeführt werden. In einer Weiterführung wird im Schritt 380a eine Ermittlung eines Nickwinkels des Zweirads 100 in Abhängigkeit der ermittelten Einfedergeschwindigkeit des Stoßdämpfers 120 durchgeführt. Es kann vorgesehen sein, dass der Nickwinkel des Zweirads 100 im Schritt 380a zusätzlich in Abhängigkeit von erfassten Beschleunigungssignalen des Zweirads ermittelt wird, insbesondere mittels einer inertialen Messeinheit. Alternativ oder zusätzlich wird der Nickwinkel des Zweirads 100 im Schritt 380a zusätzlich in Abhängigkeit des erfassten Einfederwegs der Federgabel 121 durchgeführt. Der Nickwinkel repräsentiert eine Drehung des Zweirads 100 um die Querachse des Zweirads 100, welche in Figur 2 in y-Richtung zeigt. Auf einem waagerechten Untergrund 190 der Fahrtstrecke ist der Nickwinkel beispielsweise Null. An einer Steigung des Untergrunds 190 der Fahrtstrecke, beispielsweise an einem Berg, ist der Nickwinkel in Abhängigkeit der Fahrtrichtung beispielsweise bergauf 10° oder bergab -10°. Es kann in einem weiteren optionalen Schritt 380b vorgesehen sein, einen Antriebsmotor 103 beziehungsweise den Elektromotor des Zweirads 100 in Abhängigkeit des ermittelten Nickwinkels anzusteuern. In einer Weiterbildung der vorliegenden Erfindung erfolgt eine optionale Erkennung 390a eines Luftsprungs des Elektrofahrrads in Abhängigkeit der ermittelten Einfedergeschwindigkeit Vs des Stoßdämpfers 120. Es kann vorgesehen sein, den Luftsprung im Schritt 390a zusätzlich in Abhängigkeit des im Schritt 380a ermittelten Nickwinkels, des im Schritt 370a erkannten Abhebens des Hinterrads 110 und/oder in Abhängigkeit einer Zweiradgeschwindigkeit und/oder in Abhängigkeit des erfassten Federwegs der Federgabel 121 zu ermitteln. Anschließend wird in einem weiteren optionalen Schritt 390b eine Federkonstante des Stoßdämpfers 120 und/oder einer Federkonstante der Federgabel 121 des Zweirads 100 in Abhängigkeit des erkannten Luftsprungs gesteuert. Ferner ist in dieser Weiterbildung alternativ oder zusätzlich eine optionale Steuerung 390c des Antriebsmotors des Zweirads 100 in Abhängigkeit des erkannten Luftsprungs vorgesehen. Durch die Schritte 390b und 390c wird bevorzugt eine Landung des Zweirads nach einem Luftsprung vorbereitet um die Landung des Zweirads 100 nach dem Luftsprung für den Radfahrer möglichst komfortabel und sicher zu gestalten.

**Patentansprüche**

1. Verfahren zur Ermittlung (330) einer Einfedergeschwindigkeit (Vs) eines Stoßdämpfers (120) eines Zweirads (100) mit einem Antriebsmotor (103), wobei der Stoßdämpfer (120) zwischen einem Zweiradrahmen (111) und einer Hinterradaufhängung (112) des Zweirads (100) angeordnet ist, wobei das Verfahren die folgenden Schritte umfasst

   • Erfassung (300) einer Winkelgeschwindigkeit $\omega_{rad}$ des Hinterrads (110) des Zweirads (100), **dadurch gekennzeichnet, dass** das Verfahren die folgenden weiteren Schritte umfasst
   • Erfassung (310) einer Motordrehzahl ($n_M$) des Antriebsmotors (103), und
   • Ermittlung (330) der Einfedergeschwindigkeit (Vs) des Stoßdämpfers (120) in Abhängigkeit der erfassten Winkelgeschwindigkeit ($\omega_{rad}$) und der erfassten Motordrehzahl ($n_M$).

2. Verfahren nach Anspruch 1, wobei nach der Ermittlung (330) der Einfedergeschwindigkeit (Vs) folgender Schritt durchgeführt wird

   • Steuerung (340) einer Federkonstante des Stoßdämpfers (120) des Zweirads (100) in Abhängigkeit der ermittelten Einfedergeschwindigkeit des Stoßdämpfers (120).

3. Verfahren nach einem der vorhergehenden Ansprüche, wobei nach der Ermittlung (330) der Einfedergeschwindigkeit (Vs) folgende Schritte durchgeführt werden

   • Erkennung (350a) eines Schlaglochs eines Untergrunds (190) einer Fahrtstrecke des Zweirads (100) in Abhängigkeit der ermittelten Einfedergeschwindigkeit (Vs) des Stoßdämpfers (120), und
   • Steuerung (350b) des Antriebsmotors (103) des Zweirads (100) in Abhängigkeit des erkannten Schlaglochs (120).

4. Verfahren nach einem der vorhergehenden Ansprüche, wobei nach der Ermittlung (330) der Einfedergeschwindigkeit (Vs) folgende Schritte durchgeführt werden

   • Erkennung (360a) einer Endlagendämpfung des Stoßdämpfers (120) in Abhängigkeit der ermittelten Einfedergeschwindigkeit (Vs) des Stoßdämpfers (120), und
   • Warnung (360b) des Radfahrers in Abhängigkeit der erkannten Endlagendämpfung, und/oder
   • Steuerung (360c) des Antriebsmotors (103) des Zweirads (100) in Abhängigkeit der erkannten Endlagendämpfung.

5. Verfahren nach einem der vorhergehenden Ansprüche, wobei nach der Ermittlung (330) der Einfedergeschwindigkeit (Vs) folgende Schritte durchgeführt werden

   • Erkennung (370a) eines Abhebens des Hinterrads (110) in Abhängigkeit der ermittelten Einfedergeschwindigkeit (Vs) des Stoßdämpfers (120), wobei die Erkennung des Hinterradabhebens insbesondere vorausschauend erfolgt, und
   • Warnung (370b) des Radfahrers in Abhängigkeit des erkannten Abhebens des Hinterrads (110), und/oder
   • Steuerung (370c) des Antriebsmotors (103) und/oder einer Bremse des Zweirads (100) in Abhängigkeit des erkannten Abhebens des Hinterrads (110).

6. Verfahren nach einem der vorhergehenden Ansprüche, wobei folgende Schritte durchgeführt werden

   • Erfassung (320) eines Einfederwegs einer Federgabel (121) des Zweirads (100), und
   • Ermittlung (380a) eines Nickwinkels des Zweirads (100) in Abhängigkeit der ermittelten Einfedergeschwindigkeit des Stoßdämpfers (120) und des erfassten Einfederwegs der Federgabel (121).

7. Verfahren nach Anspruch 6, wobei nach der Ermittlung des Nickwinkels folgender Schritt durchgeführt wird

   • Erkennung (390a) eines Luftsprungs des Zweirads (100) in Abhängigkeit des ermittelten Nickwinkels und der ermittelten Einfedergeschwindigkeit des Stoßdämpfers (100), und
   • Steuerung (390b) einer Federkonstanten des Stoßdämpfers (120) des Zweirads (100) und/oder einer Federkonstante der Federgabel (121) des Zweirads (100) in Abhängigkeit des erkannten Luftsprungs, und/oder
   • Steuerung (390c) des Antriebsmotors (103) des Zweirads (100) in Abhängigkeit des erkannten Luftsprungs.

8. Computerprogramm, welches dazu eingerichtet ist, ein Verfahren nach einem der Ansprüche 1 bis 7 durchzuführen.

9. Steuergerät, wobei das Steuergerät dazu eingerichtet ist, ein Verfahren nach einem der Ansprüche 1 bis 7 durchzuführen.

10. Zweirad (100), umfassend ein Steuergerät nach Anspruch 9.

**Claims**

1. Method for determining (330) a compression speed (Vs) of a shock absorber (120) of a bicycle (100) with a drive motor (103), the shock absorber (120) being arranged between a bicycle frame (111) and a rear wheel suspension system (112) of the bicycle (100), the method comprising the following steps:

   • detecting (300) of an angular velocity $\omega_{rad}$ of the rear wheel (110) of the bicycle (100), **characterized in that** the method comprises the following further steps:
   • detecting (310) of a motor rotational speed ($n_M$) of the drive motor (103), and
   • determining (330) of the compression speed (Vs) of the shock absorber (120) in a manner which is dependent on the detected angular velocity ($\omega_{rad}$) and the detected motor rotational speed ($n_M$).

2. Method according to Claim 1, the following step being carried out after determining (330) of the compression speed (Vs):

   • controlling (340) the spring constant of the shock absorber (120) of the bicycle (100) in a manner which is dependent on the determined compression speed of the shock absorber (120).

3. Method according to either of the preceding claims, the following steps being carried out after determining (330) of the compression speed (Vs):

   • detecting (358) of a pothole of an underlying surface (190) of a route of the bicycle (100) in a manner which is dependent on the determined compression speed (Vs) of the shock absorber (120), and
   • controlling (350b) of the drive motor (103) of the bicycle in a manner which is dependent on the detected pothole (120).

4. Method according to one of the preceding claims, the following steps being carried out after determining (330) of the compression speed (Vs):

   • detecting (360a) of end position damping of the shock absorber (120) in a manner which is dependent on the determined compression speed (VS) of the shock absorber (120), and
   • warning (360b) of the cyclist in a manner which is dependent on the detected end position damping, and/or
   • controlling (360c) of the drive motor (103) of the bicycle (100) in a manner which is dependent on the detected end position damping.

5. Method according to one of the preceding claims, the following steps being carried out after determining (330) of the compression speed (Vs):

   • detecting (378) of lifting of the rear wheel (110) in a manner which is dependent on the determined compression speed (Vs) of the shock absorber (120), detecting of the rear wheel lifting taking place, in particular, in an anticipatory manner, and
   • warning (370b) of the cyclist in a manner which is dependent on the detected lifting of the rear wheel (110), and/or
   • controlling (370c) of the drive motor (103) and/or a brake of the bicycle (100) in a manner which is dependent on the detected lifting of the rear wheel (110) .

6. Method according to one of the preceding claims, the following steps being carried out:

   • detecting (320) of a compression travel of a suspension fork (121) of the bicycle (100), and
   • determining (380a) of a pitch angle of the bicycle (100) in a manner which is dependent on the determined compression speed of the shock absorber (120) and the detected compression travel of the suspension fork (121).

7. Method according to Claim 6, the following step being carried out after determining of the pitch angle:

> • detecting (390a) of a jump of the bicycle (100) in a manner which is dependent on the determined pitch angle and the determined compression speed of the shock absorber (100), and
> • controlling (390b) of the spring constant of the shock absorber (120) of the bicycle (100) and/or a spring constant of the suspension fork (121) of the bicycle (100) in a manner which is dependent on the detected jump, and/or
> • controlling (390c) of the drive motor (103) of the bicycle (100) in a manner which is dependent on the detected jump.

8. Computer program which is configured to carry out a method according to one of Claims 1 to 7.

9. Control unit, the control unit being configured to carry out a method according to one of Claims 1 to 7.

10. Bicycle (100), comprising a control unit according to Claim 9.

**Revendications**

1. Procédé de détermination (330) d'une vitesse de compression (Vs) d'un amortisseur (120) d'un deux-roues (100) comportant un moteur d'entraînement (103), l'amortisseur (120) étant disposé entre un cadre de deux-roues (111) et une suspension de roue arrière (112) du deux-roues (100), le procédé comprenant les étapes suivantes

> • détection (300) d'une vitesse angulaire $\omega_{rad}$ de la roue arrière (110) du deux-roues (100), **caractérisé en ce que** le procédé comprend les autres étapes suivantes
> • détection (310) d'une vitesse de rotation de moteur ($n_M$) du moteur d'entraînement (103), et
> • détermination (330) de la vitesse de compression (Vs) de l'amortisseur (120) en fonction de la vitesse angulaire ($\omega_{rad}$) détectée et de la vitesse de rotation de moteur ($n_M$) détectée.

2. Procédé selon la revendication 1, dans lequel après la détermination (330) de la vitesse de compression (Vs) l'étape suivante est mise en œuvre

> • commande (340) d'une constante de ressort de l'amortisseur (120) du deux-roues (100) en fonction de la vitesse de compression déterminée de l'amortisseur (120) .

3. Procédé selon l'une des revendications précédentes, dans lequel après la détermination (330) de la vitesse de compression (Vs) les étapes suivantes sont mises en œuvre

> • identification (350a) d'un nid de poule d'une surface sous-jacente (190) d'un trajet du deux-roues (100) en fonction de la vitesse de compression (Vs) déterminée de l'amortisseur (120), et
> • commande (350b) du moteur d'entraînement (103) du deux-roues (100) en fonction du nid de poule (120) identifié.

4. Procédé selon l'une des revendications précédentes, dans lequel après la détermination (330) de la vitesse de compression (Vs) les étapes suivantes sont mises en œuvre

> • identification (360a) d'un amortissement de position finale de l'amortisseur (120) en fonction de la vitesse de compression (Vs) déterminée de l'amortisseur (120), et
> • avertissement (360b) du cycliste en fonction de l'amortissement de position finale identifié, et/ou
> • commande (350b) du moteur d'entraînement (103) du deux-roues (100) en fonction de l'amortissement de position finale identifié.

5. Procédé selon l'une des revendications précédentes, dans lequel après la détermination (330) de la vitesse de compression (Vs) les étapes suivantes sont mises en œuvre

> • identification (370a) d'un soulèvement de la roue arrière (110) en fonction de la vitesse de compression (Vs) déterminée de l'amortisseur (120), l'identification du soulèvement de la roue arrière s'effectuant en particulier de manière prévisionnelle, et

• avertissement (370b) du cycliste en fonction du soulèvement identifié de la roue arrière (110), et/ou

• commande (370c) du moteur d'entraînement (103) et/ou d'un frein du deux-roues (100) en fonction du soulèvement identifié de la roue arrière (110).

6. Procédé selon l'une des revendications précédentes, dans lequel les étapes suivantes sont mises en œuvre

• détection (320) d'une course de compression d'une fourche de suspension (121) du deux-roues (100), et

• détermination (380a) d'un angle de tangage du deux-roues (100) en fonction de la vitesse de compression déterminée de l'amortisseur (120) et de la course de compression détectée de la fourche de suspension (121).

7. Procédé selon la revendication 6, dans lequel après la détermination de l'angle de tangage l'étape suivante est mise en œuvre

• identification (390a) d'un bond du deux-roues (100) en fonction de l'angle de tangage déterminé et de la vitesse de compression déterminée de l'amortisseur (100), et

• commande (390b) d'une constante de ressort de l'amortisseur (120) du deux-roues (100) et/ou d'une constante de ressort de la fourche de suspension (121) du deux-roues (100) en fonction du saut identifié, et/ou

• commande (390c) du moteur d'entraînement (103) du deux-roues (100) en fonction du saut identifié.

8. Programme informatique, lequel est conçu pour mettre en œuvre un procédé selon l'une des revendications 1 à 7.

9. Appareil de commande, l'appareil de commande étant conçu pour mettre en œuvre un procédé selon l'une des revendications 1 à 7.

10. Deux-roues (100), comprenant un appareil de commande selon la revendication 9.

FIG. 1a

EP 3 831 700 B1

FIG. 1b

FIG. 2

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3077261 B1
- DE 102014209472 A1

- EP 3434499 A2